# EUROPÄISCHE PATENTSCHRIFT

(11) **EP 3 168 165 B1**
(45) Veröffentlichungstag und Bekanntmachung des Hinweises auf die Patenterteilung: **04.09.2024**
(21) Anmeldenummer: 16201545.7
(22) Anmeldetag: 05.04.2012
(51) Int. Cl.: B65C 9/40, B67B 3/26, B29C 49/78, B65B 57/00, B67C 3/00, G05B 19/418, G05B 23/02, B65B 65/08, B65B 55/04, B65B 3/00

(54) **VERFAHREN ZUM BETREIBEN EINER BEHÄLTNISBEHANDLUNGSANLAGE UND BEHÄLTNISBEHANDLUNGSANLAGE**
METHOD FOR OPERATING A CONTAINER PROCESSING ASSEMBLY AND CONTAINER PROCESSING ASSEMBLY
PROCÉDÉ DE FONCTIONNEMENT D'UNE INSTALLATION DE TRAITEMENT DE RÉCIPIENTS ET INSTALLATION DE TRAITEMENT DE RÉCIPIENTS

(30) Priorität: 18.04.2011 DE 102011017448
(43) Veröffentlichungstag der Anmeldung: 17.05.2017
(62) Teilanmeldung aus: 12715044.9
(73) Patentinhaber: Krones AG, 93073 Neutraubling (DE)
(72) Erfinder: Grimm, Volker, 93073 Neutraubling (DE)
(74) Vertreter: Hannke Bittner & Partner mbB Regensburg

(56) Entgegenhaltungen:
- EP-A1- 2 295 326
- EP-A2- 2 196 398
- DE-A1- 102006 059 001
- DE-A1- 4 447 288
- TROUPIS D ET AL: "Computer integrated monitoring, fault identification and control for a bottling line", INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, vol. 2, 8 October 1995 (1995-10-08), pages 1549 - 1556, XP010193187, ISBN: 978-0-7803-3008-5, DOI: 10.1109/IAS.1995.530488

## Beschreibung

Die vorliegende Erfindung bezieht sich auf ein Verfahren zum Betreiben einer Behältnisbehandlungsanlage sowie auf eine entsprechende Behältnisbehandlungsanlage.

Derartige Behältnisbehandlungsanlagen sind aus dem Stand der Technik seit langem bekannt. Üblicherweise handelt es sich dabei um aus einer Vielzahl von unterschiedlichen Einheiten zusammengesetzten Anlagen, welche beispielsweise Blasformmaschinen aufweisen, welche Kunststoffvorformlinge in Kunststoffbehältnisse umformen, Etikettieraggregate, Füllmaschinen, Sterilisationseinheiten und dergleichen. Ein gattungsgemäßes Verfahren und eine gattungsgemäße Behältnisbehandlungsanlage sind aus der wissenschaftliche Veröffentlichung "Computer integrated monitoring, fault identification and control for a bottling line" (Troupis D. et al) bekannt.

Für einen störungsfreien Betrieb derartiger Anlagen ist es erforderlich, dass die einzelnen Einheiten dieser Anlagen nicht nur aufeinander abgestimmt sind, sondern auch jeweils für sich genommen fehlerfrei arbeiten. So ist es denkbar, dass sich ein Fehler eines bestimmten Anlagenteils erst in einem weiteren Anlagenteil auswirkt und dort zu Systemausfällen führen kann.

In der Praxis kann der Maschinenbediener aufgrund seiner Erfahrung oftmals vorhersagen, welcher Anlagenteil bei Vorliegen einer bestimmten Störung den eigentlichen Fehler verursacht hat. Derartige Störungen treten zwar sporadisch auf, folgen jedoch zum Teil einer bestimmten Wahrscheinlichkeit. Falls beispielsweise immer besonders schnell Behältnisse produziert und transportiert werden und sich demzufolge viele Behältnisse in einer Transporteinrichtung wie auf einem Band befinden, kann es in einer nachgeordneten Anlage, wie beispielsweise einer Etikettiermaschine, zu Ausfällen kommen.

Der vorliegenden Erfindung liegt daher die Aufgabe zugrunde, ein Verfahren und eine Vorrichtung zu schaffen, welche eine derartige Fehlerdiagnose erleichtern bzw. ermöglichen. Dies wird erfindungsgemäß durch ein Verfahren nach Anspruch 1 sowie eine Behältnisbehandlungsanlage nach Anspruch 12 erreicht. Vorteilhafte Ausführungsformen und Weiterbildungen sind Gegenstand der Unteransprüche.

Bei einem erfindungsgemäßen Verfahren zum Betreiben einer Behältnisbehandlungsanlage werden Behältnisse mit einer ersten Behandlungsvorrichtung dieser Behältnisbehandlungsanlage in einer ersten vorgegebenen Weise behandelt, anschließend von dieser ersten Behandlungsvorrichtung zu einer zweiten Behandlungsvorrichtung der Behältnisbehandlungsanlage transportiert und anschließend von der zweiten Behandlungsvorrichtung in einer zweiten vorgegebenen Weise behandelt.

Weiterhin wird mittels ersten Sensoreinrichtungen eine erste Vielzahl von ersten Referenzkennwerten aufgenommen, welche für die Behandlung der Behältnisse mit der ersten Behandlungsvorrichtung charakteristisch sind. Daneben wird mittels zweiten Sensoreinrichtungen eine zweite Vielzahl von zweiten Referenzkennwerten aufgenommen, welche für die Behandlung der Behältnisse mit der zweiten Behandlungsvorrichtung charakteristisch sind. Die aufgenommenen Referenzkennwerte werden in einer Speichereinrichtung abgespeichert.

Erfindungsgemäß werden die Referenzkennwerte mit einem Zeitwert erfasst, der für das jeweilige Auftreten des jeweiligen Referenzkennwertes charakteristisch ist und es wird eine Vielzahl von Prüfkennwerten aufgenommen. Weiterhin wird aus einem Vergleich zwischen wenigstens einem dieser Prüfkennwerte und wenigstens einem Referenzkennwert wenigstens eine Information ausgegeben, welche sich auf andere Zustände der Anlage, wie beispielsweise einen Energieverbrauch, eine Produktionsleistung, Wartungsintervalle und dergleichen beziehen.

Der Begriff der Referenzkennwerte umfasst dabei auch aufnehmbare oder erfassbare (Mess)signale, welche für (Referenz)Kennwerte charakteristisch sein können. So ist es möglich, dass eine Sensoreinrichtung ein bestimmtes Messsignal erfasst, welches für einen Referenzkennwert charakteristisch ist und damit zumindest mittelbar der Referenzkennwert erfasst wird. Es wäre jedoch auch möglich, anstelle der Referenzkennwerte (Mess)signale zu erfassen.

Vorzugsweise werden mit den aufgenommenen Signalen bzw. Referenzkennwerten weitere Informationen abgelegt. So können zu den Signalen Metainformationen abgelegt werden. Je nach Konfiguration und Signal können beispielsweise als derartige Informationen solche Informationen abgelegt werden, die einen zugeordneten Ort wie etwa eine Position, eine Maschine oder einen Bereich einer Maschine oder einer Anlage oder dergleichen beschreiben. Daneben können Informationen über einen Namen einer Maschine oder eines zu verarbeitenden Materials oder Informationen über eine bestimmte Einheit oder einen Datentyp abgelegt werden.

Daneben können jedoch auch Zeichen oder Zahlen vergeben werden, denen wiederum bestimmte Aussagen zugewiesen sind. So könnte beispielsweise der Zahlenwert 1 für eine bestimmte Biersorte stehen.

Außerdem können weitere Metadaten aus einem Betriebs - Informationssystem ausgelesen werden. Falls beispielsweise ein bestimmtes Signal für einen bestimmten Behältnisverschluss charakteristisch ist, kann aus dem Informationssystem die Information über den Hersteller dieses Behältnisverschlusses ermittelt werden und so können die Informationen über dieses Signal weiter verfeinert werden. Damit hat das erwähnte Signal die verfeinerte Bedeutung, dass es einen bestimmten Verschluss, der von einem bestimmten Hersteller stammt, bezeichnet.

Bei dem Zeitwert kann es sich um einen absoluten Zeitwert handeln, es wäre jedoch auch möglich, dass den Referenzkennwerten lediglich ein relativer Zeitwert zugeordnet wird, der eine zeitliche Einordnung der Referenzkennwertes im Vergleich zu anderen Referenzkennwerten ermöglicht, etwa die Aussage, dass ein bestimmter Referenzkennwert zeitlich vor oder nach einem anderen Referenzkennwert und/oder innerhalb eines bestimmten Zeitfensters aufgenommen wurde.

Erfindungsgemäß wird die Behältnisbehandlungsanlage unter Berücksichtigung der Information gesteuert. So kann beispielsweise auf Basis dieser Information die Geschwindigkeit einer Behandlungsvorrichtung gesenkt oder erhöht werden oder auch beispielsweise ein Alarmsignal an einen Maschinenbediener ausgegeben werden.

Es wird daher vorgeschlagen, dass insbesondere über einen längeren Zeitraum hinweg, besonders bevorzugt auch permanent die Referenzkennwerte gesammelt werden. Weiterhin werden vorteilhaft im Arbeitsbetrieb ebenfalls permanent die Prüfkennwerte ermittelt und mit den Referenzkennwerten verglichen. So kann beispielsweise bei Abweichen eines bestimmten Prüfkennwertes oder auch einer Gruppe von Prüfkennwerten auf Fehler oder Störzustände in der Anlage geschlossen werden. Auch kann anhand dieses Vergleiches ermittelt werden, wenn in der Anlage bestimmte Unregelmäßigkeiten auftreten, die mit bestimmter Wahrscheinlichkeit in einem Fehler resultieren.

Es wird daher erfindungsgemäß vorgeschlagen, die menschliche Erfahrung künstlich nachzubilden, welche aufgrund eines bestimmten Ist-Zustands erkennt, wo vermutlich ein Fehler liegt.

Es kann dabei zum Beispiel bei einem bestimmten Wert auf einen Fehler in einer vorhergehenden Anlage geschlossen werden. Es wäre jedoch auch möglich, aufgrund eines bestimmten Ist-Wertes auf künftige Fehler dieses oder eines anderen Anlagenteils zu schlie-ßen.

Vorteilhaft werden viele oder alle Maschinendaten besonders bevorzugt von einem Leitsystem (MES/LDS) gesammelt, sodass es beispielsweise möglich ist, die Geschwindigkeiten der Maschinen, die Anzahl der Behältnisse auf einem Transportband, die Ausgabewerte von Stauschaltern, Temperaturen, Sorten der Maschinen, Verbrauchsmaterialien unterschiedlicher Hersteller u.s.w. permanent zu erfassen. Wenn Störungen auftreten, können diese über die besagten Maschinenzustände erkannt werden.

Der oben erwähnte Begriff der Kennwerte wie der Referenzen der Prüfkennwerte kann jegliche Kennwerte oder Signale darstellen, welche für die Anlage charakteristisch sind. Dabei kann es sich sowohl um solche Kennwerte handeln, welche sich unmittelbar auf die Behältnisse beziehen, wie beispielsweise symmetrische Abmessungen der Behältnisse, Temperaturen der Behältnisse, Materialbeschaffenheiten der Behältnisse und dergleichen. Es kann sich jedoch auch um solche Kennwerte handeln, die sich auf den jeweiligen Anlagenteil beziehen, wie beispielsweise Transportgeschwindigkeiten, Drehmomente, Temperaturen sowie nicht oder kaum beeinflussbare Umgebungsvariablen wie Luftfeuchte, Beleuchtungsstärke und dergleichen. Auch können sich die Kennwerte auf das Medium beziehen, welches in die Behältnisse eingefüllt wird, wie beispielsweise eine Temperatur der Flüssigkeiten und dergleichen.

Bei einer weiteren vorteilhaften Ausführungsform wird wenigstens eine der genannten Vorrichtungen zum Behandeln der Behältnisse auf Basis der ermittelten Prüfkennwerte gesteuert bzw. geregelt. Unter einem Fehlerzustand der Anlage wird in diesem Zusammenhang bevorzugt jede Abweichung von einem Soll-Zustand verstanden, also noch nicht notwendigerweise ein Fehler, der unmittelbar zum Ausfall des Systems führt.

Es wird weiterhin vorgeschlagen, dass die sämtlichen aufgenommenen Referenzkennwerte bevorzugt zumindest teilweise in ihrer Gesamtheit als Gesamtinformation bzw. Bild betrachtet werden, um es so auf Basis dieser Daten eine künstliche Intelligenz dieser Maschine einzulernen. Genauer kann ein neuronales Netz geschaffen werden, welches als selbstlernendes System konzipiert ist, bzw. sich so verhält. Daneben können auch sogenannte Support-Vektor-Machines (SVM) zum Einsatz kommen. Eine derartige SVM unterteilt eine Menge von Objekten bzw. Daten so in Klassen, dass um die Klassengrenzen herum ein möglichst breiter Bereich frei von Objekten bleibt. Ausgangsbasis für Beschaffung einer SVM ist eine Menge an Objekten, für die jeweils bekannt ist, welcher Klasse sie zugehören. Jedes Objekt wird dabei durch einen Vektor in einem Vektorraum repräsentiert.

Ein Einlernprozess für die Behandlungsanlage kann dabei automatisch oder auch halbautomatisch erfolgen. Weiterhin ist es möglich, dass die Mustersuche in aktuellen Daten mithilfe dieses neuronalen Netzes oder der SVM vorgenommen wird. Wird beispielsweise ein bestimmtes Muster an Prüfkennwerten oder ein bestimmter Prüfkennwert aufgefunden, der bereits zu früheren Zeitpunkten zu einem Fehler geführt hat, kann der Benutzer darauf aufmerksam gemacht werden, dass eine bestimmte Maschine wahrscheinlich in der nahen Zukunft einen Fehler macht, bzw. ausfällt. Durch die Verknüpfung der Referenzkennwerte mit den Zeitwerten ist es auch im Nachhinein möglich, bestimmten Prüf- oder Referenzkennwerten bestimmte Fehler der Anlage zuzuordnen.

Bei den Referenzkennwerten handelt es sich dabei nicht nur um automatisch erfasste Signale von Sensoren, es kann sich darüber hinaus auch um einfache und berechnete Werte aus Steuerungen handeln. Insoweit werden beispielsweise auch Drehgeber oder ähnliche Elemente von Antrieben als Sensoreinrichtungen aufgefasst. Diese Informationen, d.h. die automatisch erfassten Signale von Sensoren, einfache und berechnete Werte aus Steuerungen und dergleichen, werden vorteilhaft einer, mehreren oder allen Maschinen zugeordnet.

Vorteilhaft werden dabei wenigstens ein Prüfkennwert und wenigstens ein Referenzkennwert mittels der gleichen Sensoreinrichtung ermittelt.

Bei einer weiteren vorteilhaften Ausführungsform werden der Prüfkennwert und der Referenzkennwert mittels einer Sensoreinrichtung ermittelt, welche der ersten oder der zweiten Behandlungsvorrichtung zugeordnet ist und die Informationen, welche für die Ermittlung des Fehlerzustands charakteristisch ist, wird auf die zweite oder erste Behandlungsvorrichtung bezogen. Dies bedeutet, dass ein bestimmter Fehlerzustand, d.h. das Abweichen eines bestimmten Ist-Zustandes von einem Soll-Zustand, beispielsweise bei einer Behandlungsvorrichtung auftritt, allerdings sich ein Fehler erst bei einer anderen Behandlungseinheit ergibt.

Allgemein wird daher vorteilhaft die Information in Bezug auf eine andere Maschine ausgegeben, als diejenige Maschine, bei der der Fehler aufgetreten ist. Falls beispielsweise bei der Behandlung eines bestimmten Behältnisses an einer nachgeordneten Maschine ein Fehler auftritt, kann unter Berücksichtigung der zeitlichen Dauer überprüft werden, ob bei einer bestimmten vorangegangenen Maschine auch bereits ein Fehler bei der Behandlung dieses speziellen Behältnisses aufgetreten ist. Es wäre auch möglich, dass bei Auftreten eines Fehlers an einer bestimmten Maschine mehrere weitere Maschinen identifiziert werden, die alternativ oder kummulativ für diesen Fehler verantwortlich sind.

Bei einem weiteren vorteilhaften Verfahren wird eine Vielzahl von Prüfkennwerten aufgenommen. Es werden daher Vorhersagen nicht mehr auf Basis eines Prüfkennwertes getroffen, sondern auf Basis mehrerer Prüfkennwerte, die beispielsweise im Zusammenspiel zu einer bestimmten Aussage (die zum Auffinden eines Fehlers dienen kann) führen können.

Auch wird eine Vielzahl von Prüfkennwerten mit einer Vielzahl von Referenzkennwerten verglichen, um so vorteilhaft eine Prognose über Fehlerzustände ableiten zu können. Vorteilhaft werden in einem Arbeitsbetrieb die Prüfkennwerte laufend mit Referenzkennwerten verglichen, um Fehlerzustände zu ermitteln. Auch ist es dabei möglich, dass Referenzkennwerte an Maschinengegebenheiten angepasst, bzw. im Arbeitsbetrieb auch verändert werden.

Bei dem erfindungsgemäßen Verfahren werden Prüfkennwerte zur Ausgabe der Informationen logisch miteinander verknüpft. So kann es beispielsweise möglich sein, dass ein bestimmter Fehler nur bei Auftreten mehrerer Umstände wahrscheinlich ist; beispielsweise, wenn eine Transportgeschwindigkeit der Behältnisse einen bestimmten Grenzwert überschreitet und gleichzeitig die Behältnisse eine bestimmte geometrische Form aufweisen. Durch diese logische Verknüpfung der Prüfkennwerte werden mehrere Prüfkennwerte unterschiedlicher Sensoreinrichtungen, zur Ausgabe der Informationen genutzt werden.

Bei einem weiteren vorteilhaften Verfahren sind die Referenzkennwerte aus einer Gruppe von Referenzkennwerten ausgewählt, welche (elektrische) Stromkennwerte, Spannungskennwerte (wie etwa eine Netzspannung), Arbeitskennwerte (wie eine Motorarbeit oder verbrauchte Leistungen der Maschinen), Druckkennwerte (z.B. ein Einfülldruck, ein Blasdruck, ein Druck innerhalb eines Behältnisses oder dergleichen), Volumenkennwerte (die z.B. ein Behältervolumen, ein Füllvolumen und/oder ein Tankvolumen beschreiben), Temperaturkennwerte (wie eine Hallentemperatur, eine Füllguttemperatur, eine Motortemperatur und/oder eine Maschinentemperatur), Volumenstromkennwerte (die z.B. den Durchfluss von Luft, Wasser, Wärme, Öl, Chemikalien und/oder eines Produkts kennzeichnen), Massenstromkennwerte (etwa den Durchfluss von Rohmaterialien wie Weizen), Massenkonzentrationskennwerte, Geschwindigkeitskennwerte (wie Transportbandgeschwindigkeiten oder Geschwindigkeiten der transportierten Behältnisse), Gewichtswerte (wie beispielsweise Flaschengewichte oder Gebindegewichte) , ph-Werte (etwa diejenigen von Wasser oder einer Säure), Kraftwerte (wie beispielsweise von Schubkräften) Drehmomentkennwerte, Impulskennwerte, Leistungskennwerte (etwa bezüglich einer Maschinenleistung), Stückzahlkennwerte, zeitliche Kennwerte (wie z.B. die Signalzeit von jedem Signal, eine Tageszeit, eine Zeitzone, einen Wochentag oder ein Quartal) , Sortenkennwerte (wie etwa eine aktuelle Flaschensorte, Behältersorten, Gebindesorten oder Produktsorten), Bedienereingriffe, sonstige Kennwerte (beispielsweise hinsichtlich Scheinleistung, Widerstand, Vol, Brix, Plato, Sievert, Siemens, Grad, Feuchte), Kombinationen hieraus und dergleichen enthält.

Auch können Zyklus- oder Frequenzkennwerte (wie z.B. die Anzahl der Füllerrunden pro Minute, die Anzahl der Behälter pro Stunde, die Anzahl der Flaschen pro Sekunde oder der Verschüsse pro Stunde) ermittelt werden oder auch Verhältnisskennwerte (wie etwa ein Ausstoß in Prozent oder eine Verteilung bei der Sortierung).

Auch können beispielsweise als Referenzkennwerte solche Werte aufgenommen werden, die sich auf geometrische Größen wie Längen, Breiten oder Höhen beziehen. Dies können beispielsweise Transportbandlängen zwischen Maschinen, Größen der Gebinde und/oder Behältnisse oder auch Höhenangaben (z.B. eine Höhe über Meereshöhe) sein.

Es werden damit Informationen aus der Behältnisbehandlungsanlage gesammelt, wobei vorteilhaft sämtliche Informationen, welche von Sensoreinrichtungen oder auch von Steuerungen zur Verfügung gestellt werden können, gesammelt werden.

Weiterhin ist es möglich, diese Informationen zu kategorisieren, beispielsweise in Geschwindigkeitsinformationen (bezüglich Anlagen und Bändern), in Temperaturen, in Spannung, in Strom, Leistung, Arbeit, Störungen, Zählzustände und dergleichen.

Bei einem weiteren vorteilhaften Verfahren werden im Fehlerfall der Behältnisbehandlungsanlage die für diesen Fehlerfall charakteristischen Referenzkennwerte ermittelt und abgespeichert. Wenn beispielsweise eine Störung auftritt, erfolgt vorteilhaft eine Analyse dieser Störung, wobei vorteilhaft zunächst der Verursacher dieser Störung aufgesucht wird, bei dem es sich meist um eine oder mehrere Maschinen handelt. Dies kann dabei vollautomatisch geschehen. Es wird hierbei bevorzugt davon ausgegangen, dass die Störung sich auf eine Maschine bezieht oder mehreren (in Frage kommende) Maschinen zugeordnet werden kann.

Nachdem bevorzugt für eine Vielzahl unterschiedlicher Störungen oder Fehlerzustände zugehörigen Referenzkennwerte in einer Datenbank gesammelt wurden und bevorzugt diese Informationen gespeichert wurden, kann das System im künftigen Betrieb nach Auffälligkeiten suchen. Dabei ist es möglich, die Informationen einer Verursachermaschine zuzuordnen, wobei bevorzugt auch eine Analyse nach Auffälligkeiten durchgeführt wird.

Bei einem weiteren vorteilhaften Verfahren werden die Prüfkennwerte oder auch die Referenzkennwerte mittels statistischen Methoden ausgewertet. Es werden damit vorteilhaft statistische Verfahren genutzt, um in den aufgenommenen Daten bzw. Referenzkennwerten oder Prüfkennwerten Muster zu erkennen. Falls derartige Muster in einem bestimmten Zeitraum einer Störung häufiger vorkommen, als zu anderen Zeiten, kann so auf die Störung geschlossen werden. Der Zeitraum der Störung wird, insbesondere unter Berücksichtigung der Transportgeschwindigkeiten, auf die Verursachermaschine zurückgerechnet. Dabei ist es auch möglich, die Laufzeiten zwischen den einzelnen Maschinen zu berücksichtigen. Weiter ist es auch möglich, einen bestimmten Referenzkennwert wiederholt aufzunehmen und einen Mittelwert festzulegen, wobei durch einen Vergleich mit diesem Mittelwert überprüft werden kann, ob ein bestimmter Prüfkennwert im vorgegebenen Normalbereich liegt.

Bei einem weiteren vorteilhaften Verfahren wird einem bestimmten an einer nachgeordneten Vorrichtung ermittelten Prüfkennwert ein zu einem früheren Zeitpunkt an einer vorangeordneten Vorrichtung ermittelter Prüfkennwert zugeordnet.

Falls beispielsweise an einer nachfolgenden Maschine ein bestimmter Fehler festgestellt wird, wird eine vorgegebene Zeit berücksichtigt, an der das Behältnis mit der vorhergehenden Maschine behandelt wurde und für diese vorhergehende Maschine wird der entsprechende Wert ermittelt.

Vorteilhaft werden dabei auch die Laufzeiten der Behältnisse zwischen den Behandlungsvorrichtungen berücksichtigt.

Hierbei ist es auch möglich, dass die berechneten Zeiträume mit einer gewissen Unschärfe durchsucht werden, d.h. es werden nicht nur exakte Zeitpunkte überprüft, sondern auch um diese Zeitpunkte liegende Zeiträume. Auch die aufgenommenen Prüfkennwerte werden mit einer vorgegebenen Unschärfe durchsucht. Daneben werden vorteilhaft auch nicht nur die Informationen der Verursachermaschinen, sondern auch der Nachbarmaschinen durchsucht. Allerdings kann auch hier wieder bevorzugt eine Unschärfe (fuzzy) berücksichtigt werden. Weiterhin können auch sogenannte Heuristiken eingesetzt werden, d.h. erfahrungsbasierte Techniken zum Lösen von Problemen. Auch hierdurch können die Werte bzw. die Unschärfen beeinflusst werden.

Hat das System bzw. die Behandlungsanlage bestimmte Muster erkannt, werden diese Muster gelernt. Treten nun in den Referenzkennwerten d.h. im Informationsstrom diese Muster (häufiger) auf, können entsprechende Aktionen angestoßen werden, wie beispielsweise eine Warnung an den Maschinenbetreiber ausgegeben werden.

Bei vielen Maschinen und vielen Mustern können Pegel von "verdächtigen Mustern" definiert werden, deren Auftreten den Pegel steigen lässt bzw. die eine bestimmte Störsituation anzeigen. Dieser Pegel kann visualisiert werden und dient dem Betreiber als Warnhinweis, wie kritisch die Behandlungsanlage momentan ist bzw. läuft.

In einem weiteren bevorzugen Verfahren kann das System auch Muster analysieren und dem Anwender Verbesserungsstrategien erarbeiten. Dabei sind sowohl halbautomatische als auch vollautomatische Vorgehensweisen denkbar. Werden bestimmte Muster zum Beispiel in einzelnen Kategorien erkannt, wie beispielsweise eine vermehrte Häufigkeit der Störungen bei höheren Geschwindigkeiten, dann kann das System eine optimale Geschwindigkeit berechnen. Unter den Mustern wird dabei vorteilhaft eine Vielzahl von Prüfkennwerten verstanden. Dabei sind vorteilhaft die so aufgenommenen Prüfkennwerte und Referenzkennwerte aus der Behältnisbehandlungsanlage ständig als Rückkopplung der Steuerungseinrichtung und als Informationen für die Mustersuche. Werden klare Muster einer Störung erkannt, kann das System auch eingreifen und beispielsweise kurzfristig die Geschwindigkeiten reduzieren, um einen möglichen Fehler im Vorfeld gar nicht erst zu verursachen. Auf diese Weise wird eine vorausschauende Störungsbehebung realisiert.

Dabei ist es auch möglich, dass für die Muster von Störungen nicht nur Informationen einer Kategorie ausgewertet werden müssen, sondern auch eine Kombination von unterschiedlichen Werten herangezogen werden kann, auf deren Basis das Vorliegen eines Fehlers ermittelt wird. Ist beispielsweise die Geschwindigkeit an einem bestimmten Band hoch, die Anzahl an Flaschen an diesem Band niedrig und handelt es sich weiterhin bei den Flaschen um eine bestimmte Sorte (zum Beispiel 0,5 PET), dann treten vermehrt Störungen auf. Durch diese große Anzahl von Informationen werden die Muster automatisch gesucht und verknüpft, wobei vorteilhaft auch Heuristiken mit eingebunden sind. Vorteilhaft werden, wie oben erwähnt, auch Methoden der künstlichen Intelligenz verwendet, um die Muster zu erkennen. Über die Störanalyse können die Verfahren automatisch gelernt werden.

Bei einer weiteren vorteilhaften Ausführungsform weist die Behandlungsanlage wenigstens drei Vorrichtungen auf, welche die Behältnisse behandeln. Vorteilhaft ist wenigstens eine Behandlungsvorrichtung aus eine Gruppe von Vorrichtungen ausgewählt, welche Umformungsvorrichtungen zum Umformen von Kunststoffvorformlingen zu Kunststoffbehältnissen, Füllvorrichtungen zum Befüllen von Behältnissen, Transportvorrichtungen zum Transportieren von Behältnissen, Sterilisationsvorrichtungen zum Sterilisieren von Behältnissen, Verschließvorrichtungen zum Verschließen von Behältnissen mit Verschlüssen, Etikettiervorrichtungen zum Etikettieren von Behältnissen, Kombinationen hieraus und dergleichen enthält.

Wie oben erwähnt, wird vorteilhaft bei einer Zuordnung von Prüfkennwerten zu Referenzkennwerten eine Unschärfe berücksichtigt. Es wird daher vorteilhaft eine sogenannte Fuzzy-Logik verwendet, wobei, wie oben erwähnt, sowohl hinsichtlich des Zeitraums als auch hinsichtlich der aufgenommenen Werte diese Unschärfe berücksichtigt werden kann.

Durch die hier beschriebene Vorgehensweise wird eine Verbesserung der Maschinen und Anlagen durch Erkennung von Störungen und deren Verursacher auch bei Vorhandensein von vielen miteinander zusammenarbeitenden Anlagenteilen erreicht. Mit diesen Informationen können allgemeine Störhäufigkeiten von bestimmten Maschinentypen und Maschinenkonfigurationen ermittelt werden. Eine Störhäufigkeit der Störungen pro Maschinentyp kann der Entwicklung Anhaltspunkte für weitere Verbesserungen liefern und kann sich auch in Qualitätskennzahlen niederschlagen. Weiterhin könnte ein Dienst, beispielsweise auch ein netzbasierter Dienst, für die Anlagenoptimierungen vorgesehen sein, der einem Maschinenbetreiber konkrete Verbesserungen auf Basis von Fehleranalysen vorschlagen kann. Die Verbesserung könnte beispielsweise auch der Hinweis sein, dass Verbrauchsmaterialien von einem bestimmten Zulieferer nur einen eingeschränkten Wirkungsgrad zulassen.

Vorteilhaft werden auch Störungen bei der Behältnisbehandlung, wie beispielsweise bei der Abfüllung, durch eine Betriebsdatenerfassung erfasst und gespeichert. Dabei ist es auch möglich, dass die Störungen automatisch von den jeweiligen Anlagenbetreibern erfasst werden. Tritt an einer bestimmten Anlage eine Störung auf, welche eine bestimmte Grenzschwelle überschreitet (z.B. ein Anlagenstillstand von mehr als 10 Minuten), wird vorteilhaft ein Fehlerprotokoll erstellt und dabei werden auch die Störungen aufgeführt, welche in den vorgeordneten Anlagenteilen aufgetreten sind, daneben auch vorteilhaft Betriebszustände der Behandlungsanlage sowie weitere Informationen. Vorteilhaft ist dieses Protokoll maschinenlesbar und kann über einen elektronischen Weg an einen Anlagenhersteller übermittelt werden.

Anhand dieser Informationen können die Störverursacher ermittelt werden. Dies kann dabei mit bestimmten Methoden durchgeführt werden und ist abhängig von einer Leitmaschine, einem Maschinenablauf in einer Fließfertigung, der Art der Störung (Mangel, Stau, Eigenstörung etc.) und dem zeitlichen Auftreten. Beim Maschinenhersteller können die Störungen bzw. Fehlerzustände und die Betriebszustände den jeweiligen Anlagenteilen (beispielsweise anhand der Kommissionsnummern) zugeordnet werden und damit pro Maschinentyp eine Liste der häufigsten Störursachen ermittelt werden. Diese Informationen können vorteilhaft an SAP angebunden werden, um einen einheitlichen Datenbestand aufzuweisen.

Diese Listen über die Fehlerhäufigkeit können weiterhin Aufschluss über systematische Schwachstellen der Maschinen liefern und damit Verbesserungspotenziale aufzeigen. Dabei könnte ein kontinuierlicher Verbesserungsprozess begonnen und verfolgt bzw. gemessen werden. Auch können Qualitätskennzahlen über viele Maschinen hinweg gebildet werden, um die schwächste Maschine in der Anlage aufzuzeigen.

In einem bevorzugten Ablauf des hier vorgeschlagenen Verfahrens werden zunächst die Referenzkennwerte bzw. Signale, insbesondere durch zyklisches Einlesen aufgenommen. Anschließend können die aufgenommenen Daten komprimiert werden, wobei jedoch der Informationsgehalt der Daten bevorzugt erhalten bleibt. In einem weiteren Verfahrensschritt können die Daten -insbesondere in einem Datenbankverwaltungssystem- gespeichert werden.

Im Rahmen einer Analyse können beispielsweise Maschinenzustände wie etwa eine Störung einer Leitmaschine erkannt werden. Auch kann die Ursache einer solchen Störung ermittelt werden (sowohl im Falle einer Eigenstörung dieser Maschine als auch, falls der Fehler bei einer vorgelagerten Maschine liegt). Dabei ist es möglich, dass zur Analyse die jeweils für diese Analyse benötigten Referenzkennwerte bzw. Signale ermittelt werden, wobei diese Ermittlung über einen vorgegebenen zeitlichen und/oder örtlichen Bereich hinweg erfolgen kann. Auf diese Weise kann für jede einzelne Maschine bezüglich einer Zeitachse eine Unterscheidung zwischen dem Auftreten einer Störung und einem störungsfreien Betrieb getroffen werden. Es kann so ein Zeitbereich für eine Ursache ermittelt werden, wobei auch die Laufzeit zwischen zwei oder mehreren Maschinen berücksichtigt werden kann. Auch können im Rahmen der Analyse der Maschine die Signalinformationen die der Maschine und deren Bereich zugeordnet sind, in dem zeitlichen Umfeld bzw. Bereich der Störung analysiert werden. Daneben kann auch überprüft werden, ob es zu Häufungen hinsichtlich eines bestimmten Fehlers oder einer bestimmten Gruppe von Fehlern kommt, z.B. in Abhängigkeit von einem Produktionszustand oder einem Ruhezustand der Maschine.

Auch ist eine Anzeige von bestimmten Häufungen möglich. Falls signifikante Häufungen (Korrelationen) zwischen Signalen bzw. Kennwerten auftreten, können diese angezeigt werden.

So könnte beispielsweise die Informationen ausgegeben werden, dass die Fehler meist zwischen 10:00-11:00 auftreten.

Vorteilhaft werden diese Ergebnisse durch Menschen ausgewertet. Es könnte sich beispielsweise herausstellen, dass eine Packmaschine meist zwischen 8 und 10 Uhr morgens die meisten Stillstände verursacht oder dass, wenn die Temperatur über 30 Grad liegt, mehr Störungen der Anlage auftreten. Es liegt nun am Bedienpersonal, diesen Zustand zu analysieren und abzustellen.

Daneben ist unter Zugrundelegung des erfindungsgemäßen Verfahrens auch eine halbautomatische oder vollautomatische Steuerung der Anlage möglich.

Wurde beispielsweise festgestellt dass es zu einer Häufung der Fehler von Maschine x kommt, wenn Signal bzw. Kennwert 1 ein bestimmtes Niveau und eine bestimmte Tendenz hat und wenn Signal bzw. Kennwert 2 ein best. Niveau hat so kann dies folgendermaßen (formuliert werden).

### Signal 1 (Niveau, Tendenz) & Signal 2 (Niveau) -> Maschine x (Tendenz Leistungsabfall)

Anhand der gefundenen Beziehungen gibt der Benutzer Möglichkeiten vor, wie die Signale für den Leistungsabfall gesteuert werden können. Es kann also der Benutzer dem System die erlaubte Steuerung mitteilen. Es kann durch das System ermittelt werden, welche Parameter das System verwenden kann, um die Tendenz oder das Niveau der Ausgangssignale zu modifizieren.

Damit kann die Software vorteilhaft die Ausgangsignale ändern falls sie in den Bereich kommen, welcher eine Anlagenleistungsminimierung verursachen würde.

Die Ergebnisanalyse kann auch dazu führen, dass aufgrund der Betriebszustände mit reduzierter Leistung aber dadurch höheren Wirkungsgrad produziert wird.

Die vorliegende Erfindung ist weiterhin auf eine Behältnisbehandlungsanlage nach dem Anspruch 12 gerichtet.

Es wird daher auch vorrichtungsseitige vorgeschlagen, eine Anlage zur Verfügung zu stellen, welche eine Analyse von gegenwärtigen (gegebenenfalls auch vergangenen und/oder zukünftigen) Fehlerzuständen ermöglicht bzw. ein Betreiben einer Abfüllanlage für Getränke mit einer Leistung die keine erhöhte Fehlerhäufigkeit provoziert.

Weitere Vorteile und Ausführungen ergeben sich aus den beigefügten Zeichnungen:
Darin zeigen:
Fig. 1 eine mögliche Ausgestaltung einer erfindungsgemäßen Behältnisbehandlungsanlage;
Fig. 2 eine Darstellung zur Veranschaulichung eines der Erfindung zugrunde liegenden Problems;
Fig. 3a, 3b Darstellungen zur Veranschaulichung des erfindungsgemäßen Verfahrens;
Fig. 4 eine Darstellung zur Veranschaulichung zeitlicher Zusammenhänge;
Fig. 5 eine Darstellung zur Veranschaulichung zeitlicher Zusammenhänge;
Fig. 6 eine weitere Darstellung zur Veranschaulichung zeitlicher Zusammenhänge;
Fig. 7a-7c drei Darstellungen zur Veranschaulichung zeitlicher Zusammenhänge;
Fig. 8a, 8b zwei Diagramme zur Veranschaulichung eines Maschinenzusammenhangs;
Fig. 9a-9c zwei weitere Darstellungen zur Veranschaulichung zeitlicher Auswirkungen; und
Fig. 10 eine Darstellung zur Veranschaulichung von Wertezusammenhängen.

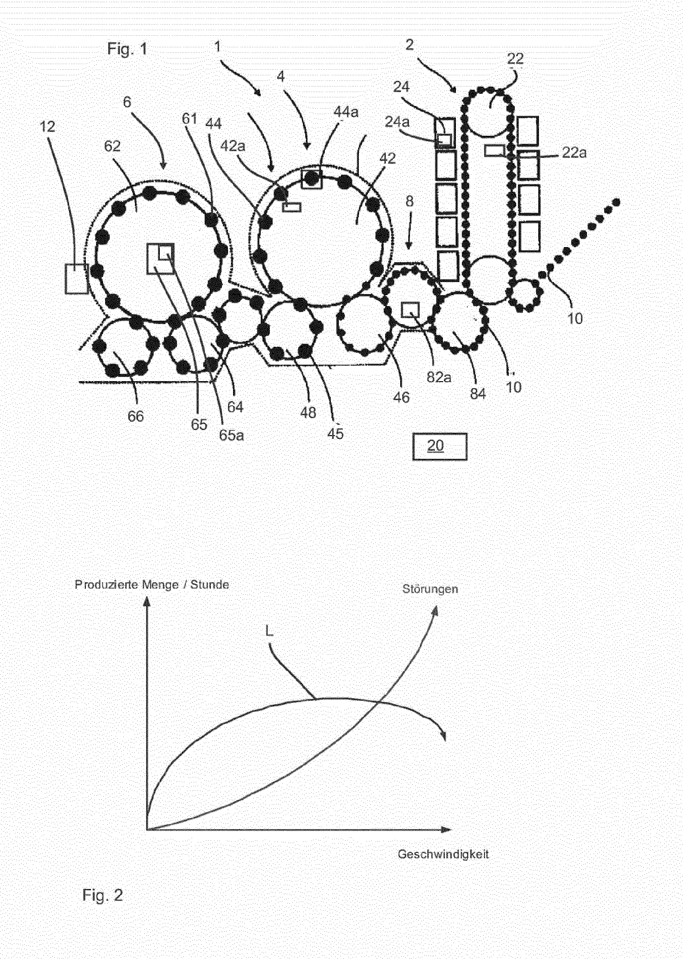

Figur 1 zeigt eine mögliche Ausführungsform einer erfindungsgemäßen Behältnisbehandlungsanlage 1. Diese Behältnisbehandlungsanlage 1 weist dabei eine erste Behandlungsvorrichtung 2 auf, welche Behältnisse 10, hier Kunststoffvorformlinge 10, behandelt. Im Einzelnen handelt es sich bei der ersten Behandlungsvorrichtung 2 um einen Ofen, der Kunststoffvorformlinge 10 während ihres Durchlaufs mittels einer Transporteinrichtung 22 erwärmt. Zu diesem Zweck weist der Ofen eine Vielzahl von Heizelementen 24, wobei es sich beispielsweise um Infrarotheizelemente, aber auch etwa um Mikrowelleneinrichtungen handeln kann. Die Bezugszeichen 22a und 24a beziehen sich auf Sensoreinrichtungen, mit denen für diesen Heizvorgang charakteristische Größen erfasst werden können. So kann es sich bei der Sensoreinrichtung 22a um eine Steuerung der Transporteinrichtung 22 handeln, welche auf diese Weise beispielsweise eine Transportgeschwindigkeit der Kunststoffvorformlinge, eine Verweildauer in der Heizeinrichtung 2 oder dergleichen bestimmt. Bei der Einrichtung 24a kann es sich beispielsweise um eine Temperaturmesseinrichtung handeln, welche die Temperatur der einzelnen Elemente 24 bestimmt oder auch beispielsweise berührungslos Temperaturen der Kunststoffvorformlinge bestimmen kann.

Nach der Erwärmung ist es möglich, dass die Kunststoffvorformlinge mittels einer weiteren Behandlungsvorrichtung 8, wie hier einer Sterilisationsvorrichtung, sterilisiert werden. Somit bezieht sich das Bezugszeichen 82a wiederum auf eine Sensoreinrichtung, welche beispielsweise für diesen Sterilisationsvorgang charakteristische Parameter bestimmt, wie zum Beispiel eine Sterilisationsatmosphäre, eine Temperatur eines Sterilisationsmittels und dergleichen. Das Bezugszeichen 84 kennzeichnet eine Zuführeinrichtung, welche die Kunststoffvorformlinge der Sterilisationseinrichtung 8 zuführt.

Das Bezugszeichen 4 kennzeichnet in seiner Gesamtheit eine Behandlungsvorrichtung, wie beispielsweise eine Umformungseinrichtung zum Umformen von Kunststoffvorformlingen zu Kunststoffbehältnissen. Diese Vorrichtung kann dabei eine Vielzahl von Umformungsstationen 44 aufweisen, die hier an einem gemeinsamen Träger 42 (insbesondere einem drehbaren Blasrad) angeordnet sind und sich mit diesem drehen. Das Bezugszeichen 42a kennzeichnet wieder eine Sensoreinrichtung, welche beispielsweise für diesen Transport der Kunststoffvorformlinge charakteristische Daten ausgibt, wie beispielsweise eine Drehgeschwindigkeit, einen Lagewert und dergleichen.

Das Bezugszeichen 84 kennzeichnet einen Transportstern, mit dem die Behältnisse die Behandlungsvorrichtung 8 übergeben werden. Für diesen Transport charakteristische Daten können mittels Sensoreinrichtungen ausgelesen werden. Das Bezugszeichen 44a kennzeichnet eine oder mehrere Sensoreinrichtungen, welche für diesen Umformungsprozess charakteristische Parameter ausgeben, wie beispielsweise einen Druckluftverlauf, Öffnungszeiten der einzelnen Blasluftventile, Drücke und dergleichen. Mittels einer Zuführeinrichtung 46 werden die Kunststoffvorformlinge der zweiten Behandlungsvorrichtung zugeführt und mittels einer Abführeinrichtung 48 dieser abgeführt. Dabei können hier wiederum Greifelemente 45 vorgesehen sein, welche die Kunststoffbehältnisse greifen. Dabei können (nicht gezeigt) Sensoreinrichtungen vorgesehen sein, die auch diesen Transportvorgang auswerten.

Bezugszeichen 6 kennzeichnet eine weitere Behandlungsvorrichtung, bei der es sich hier um eine Fülleinrichtung zum Befüllen der nunmehr umgeformten Kunststoffbehältnisse handelt. Auch hier ist wiederum ein Träger 62 mit einer Vielzahl von Füllelementen 61 vorgesehen sowie eine Antriebseinrichtung 65 sowie eine Sensoreinrichtung 65a, die wiederum für diese Behandlung charakteristische Daten aufnimmt, wie etwa Durchflussmenge des einzufüllenden Produktes, eine Temperatur des einzufüllenden Produktes und dergleichen. Bezugszeichen 64 kennzeichnet wieder einen Zuführstern, der die leeren Behältnisse zuführt und das Bezugszeichen 66 einen Abführstern, der die befüllten Behältnisse abführt.

Bezugszeichen 12 kennzeichnet eine weitere Behandlungsvorrichtung, welche bespielsweise die befüllten Behältnisse verschließt. D.h. daneben können weitere Behandlungsvorrichtungen vorgesehen sein, wie beispielsweise Etikettiereinrichtungen zum Etikettieren der Behältnisse, Transporteinrichtungen zum Transportieren der Behältnisse und dergleichen. Das Bezugszeichen 20 bezieht sich auf eine Steuerungseinrichtung zum Steuern der Behältnisbehandlungsanlage. Daneben können die einzelnen Behandlungsvorrichtungen selbst eigene Steuerungseinrichtungen aufweisen

Dabei ist es möglich, dass die einzelnen Behandlungsvorrichtungen der Behältnisbehandlungsanlage miteinander geblockt bzw. synchronisiert sind, d.h. mit aufeinander angepassten Geschwindigkeiten laufen. Es wäre zudem möglich, dass zwischen einzelnen Behandlungsvorrichtungen Puffereinrichtungen angeordnet sind, welche einen kurzfristigen Ausfall einer Behandlungsvorrichtung kompensieren können. Auch diese Puffereinrichtungen können dabei Sensoreinrichtungen aufweisen und auch die Daten dieser Sensoreinrichtungen können ausgelesen werden. So wäre es möglich, dass es sich bei den Referenzkennwerten auch um Anzahlen von Behältnissen handelt, welche sich gerade in der Puffereinrichtung befinden oder das bestimmt wird, wie sich die Anzahl der Behältnisse in der Puffereinrichtung zeitlich ändert.

Fig. 2 zeigt eine Darstellung des der Erfindung zugrunde liegenden Problems. Dabei ist auf der X-Achse eine Anlagengeschwindigkeit aufgezeigt und auf der Y-Achse die tatsächlich produzierte Menge der Behältnisse pro Stunde. Man erkennt, dass bei einer Erhöhung der Geschwindigkeit die produzierte Menge pro Stunde ansteigt. Allerdings steigen bei höherer Arbeitsgeschwindigkeit auch die Störungen in ihrer Anzahl. Dies bedeutet, dass insgesamt die Produktionsleistung des Systems wieder abnimmt.

Eine Aufgabe der vorliegenden Erfindung besteht darin, derartige Störungszusammenhänge zu erkennen und die Anlage auf eine optimale Leistung zu regeln.

Dazu ist es möglich, dass die Informationen der einzelnen Sensoreinrichtungen oder allgemein der Behältnisbehandlungsanlage ständig als Rückkopplung zur Steuerung als Information für eine Mustersuche dienen. Werden beispielsweise klare Muster einer Störung erkannt, kann das System auch eingreifen und beispielsweise kurzfristig die Geschwindigkeiten reduzieren, um einen möglichen Fehler im Vorfeld gar nicht erst zu verursachen. Auf diese Weise ist auch eine vorausschauende Störungsbehebung realisiert.

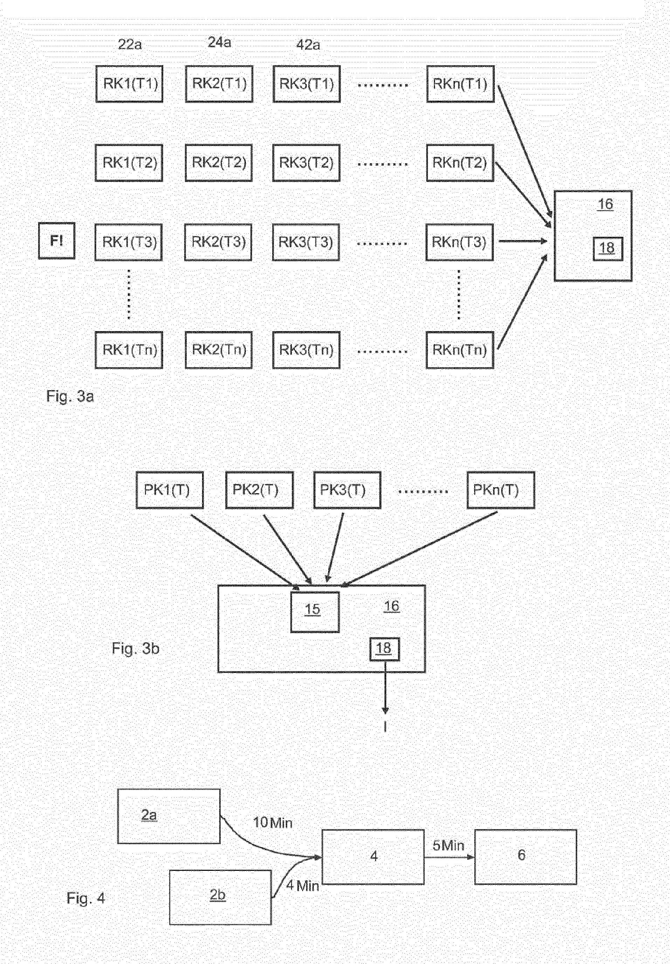

Die Figuren 3a und 3b veranschaulichen diagrammartig eine erfindungsgemäße Vorgehensweise. Im laufenden Betrieb werden zeitweise oder kontinuierlich Datensätze der einzelnen Sensoreinrichtungen 22a, 24a, 42a u.s.w. gemessen und als Referenzkennwerte RK1 (T1), RK2 (T1), RK3 (T1) und Punkt RKn (T1) in der Speichereinrichtung 16 abgespeichert. Es beziehen sich hier die einzelnen Referenzkennwerte RK1 bis RKn auf einen bestimmten Zeitpunkt T1, zu dem diese gemessen wurden. Zu einem weiteren Zeitpunkt T2 werden die entsprechenden Referenzkennwerte aufgenommen und in die Speichereinrichtung 16 abgespeichert. Auf diese Weise wird eine Vielzahl von Datensätzen von Referenzkennwerten RK1 bis RKn gewonnen.

Bei den Referenzkennwerten RK1 (T3) bis RKn (T3) handelt es sich um Referenzkennwerte, die vor und/oder während eines Fehlerzustands der Maschine aufgenommen wurden. Es wäre dabei auch möglich, permanent neue Referenzkennwerte aufzunehmen und ggfs. alte Werte zu löschen.

Die Prozessoreinrichtung 18 kann, wenn gewünscht, auch einzelne Referenzkennwerte RK1 bis RKn derart zuordnen, dass sie sich jeweils auf die Behandlung des gleichen Behältnisses beziehen. Daher ist es beispielsweise möglich, dass ein Referenzwert RK2 (T3) einem Referenzwert RK1 (T1) zugeordnet wird, der sich auf das gleiche behandelte Behältnis bezieht.

Wie Fig. 3b zeigt, können zu einem späteren Zeitpunkt Prüfkennwerte PK1 (T) bis PKn (T) aufgenommen werden. Die einzelnen Prüfkennwerte PK1 (T) bis PKn (T) werden einer Vergleichseinrichtung 15, welche hier Bestandteil der Speichereinrichtung 16 sein kann, zugeführt. Bei diesen Vergleichen kann beispielsweise festgestellt werden, dass diese Prüfkennwerte eine gewisse statistische Ähnlichkeit mit Referenzkennwerten aufweisen, welche im Vorfeld einer Störung aufgetreten sind. Entsprechend kann über Prozessoreinrichtung 18 und eine (nicht gezeigte) Anzeigeeinrichtung die Informationen an einen Benutzer ausgegeben werden, dass in Kürze mit dem Auftreten eines bestimmten Fehlers zu rechnen ist. Auch wäre es möglich, dass die Anlage selbsttätig reagiert und beispielsweise eine Leistung der Anlage reduziert.

Fig. 4 zeigt eine Darstellung zur Veranschaulichung zeitlicher Zusammenhänge. Es ist zum Beispiel möglich, dass die Behältnisse, die von einer Behandlungsvorrichtung 4 behandelt werden 5 Minuten später von der zweiten Behandlungsvorrichtung 6 behandelt werden. So ist es möglich, festzustellen, dass die gleichen Behältnisse 5 Minuten früher von der ersten Behandlungsvorrichtung 2b oder alternativ 10 Minuten vorher von einer zweiten Behandlungsvorrichtung 2a behandelt wurden. Dabei kann es sich beispielsweise bei der Behandlungsvorrichtung 2b wieder um den auch in Fig. 1 dargestellten Ofen handeln und bei der Behältnisbehandlungsvorrichtung 2a beispielsweise um eine Erzeugungseinheit, welche die Kunststoffvorformlinge erzeugt. Insoweit ist es möglich, einen zu einem bestimmten Zeitpunkt beispielsweise von der Behandlungsvorrichtung 4 aufgenommenen Referenzkennwert anderen Referenzkennwerten zuzuordnen, der 4 oder 10 Minuten vorher bei den Behandlungsvorrichtungen 2a oder 2b aufgetreten ist und der sich auf das gleiche Behältnis oder die gleiche Gruppe von Behältnissen bezieht. Daneben wäre es auch möglich, die in Fig. 3a gezeigten Kennwerte neu zu gruppieren und zwar so, dass sie zwar unterschiedlichen Zeiten entsprechen, allerdings sich auf das jeweils gleiche behandelte Behältnis oder die gleiche behandelte Behältnisgruppe beziehen.

Um diese Zuordnungen zu ermöglichen, wäre es auch denkbar, dass die jeweiligen Transportgeschwindigkeiten der Behältnisse stets mit aufgenommen werden, sodass unter Berücksichtigung dieser Transportgeschwindigkeiten oder auch einer integralen Geschwindigkeit über einen bestimmten Zeitraum hinweg eine Zuordnung der einzelnen Referenzkennwerte zueinander ermöglicht ist.

Allgemein können als Eingangssignale bzw. Referenzkennwerte auch Zählerwerte, Geschwindigkeiten, Steuerungsparameter, Zustände und Fehler, d.h. allgemein automatisch erfasste Signale von Sensoren, einfache und berechnete Werte aus Steuerungen und dergleichen verwendet werden. Diese Informationen können einer Behandlungsvorrichtung, mehreren Behandlungsvorrichtungen oder auch allen Behandlungsvorrichtungen zugeordnet werden. Daher wäre es auch möglich, die einzelnen Informationen zu kategorisieren, beispielsweise in Geschwindigkeitswerte (über die Anlage, über Bänder und dergleichen), in Temperaturen, Spannungen, Ströme, Leistungen, Arbeit, Störzustände, Zählerstände, Luftfeuchte (Etiketten), Beleuchtungsstärke in Hallen (Inspektionsmaschinen, optische Sensoren), IR Absorption (Preformen) und dergleichen.

Je nach der Bearbeitungs- bzw. Behandlungsvorrichtung sind unterschiedliche Steuerungsmöglichkeiten denkbar. So kann beispielsweise eine Maschinengeschwindigkeit geändert werden oder es können Maschinenparameter, wie zum Beispiel Temperaturen bei der Blasmaschine oder auch Drücke bei der Blasmaschine, die Füllgeschwindigkeiten beim Füller und dergleichen verändert werden. Auch kann eine Steuerungsmöglichkeit darin bestehen, dass Kontrollpersonal informiert, oder Verbrauchsmaterial zurück gewiesen wird.

Die einzelnen Messwerte, Signale, Stellgrößenparameter werden jeweils als Werte bzw. Referenzkennwerte bezeichnet. Ein oder mehrere derartige Referenzkennwerte haben wiederum üblicherweise Auswirkungen auf andere Werte. Diese Auswirkungen sind meist über einen zeitlichen Zusammenhang gekoppelt. Dabei kann der zeitliche Zusammenhang eine Konstante sein oder sie kann sich über einen Faktor anderer Werte ergeben, wie beispielsweise der Maschinengeschwindigkeit.

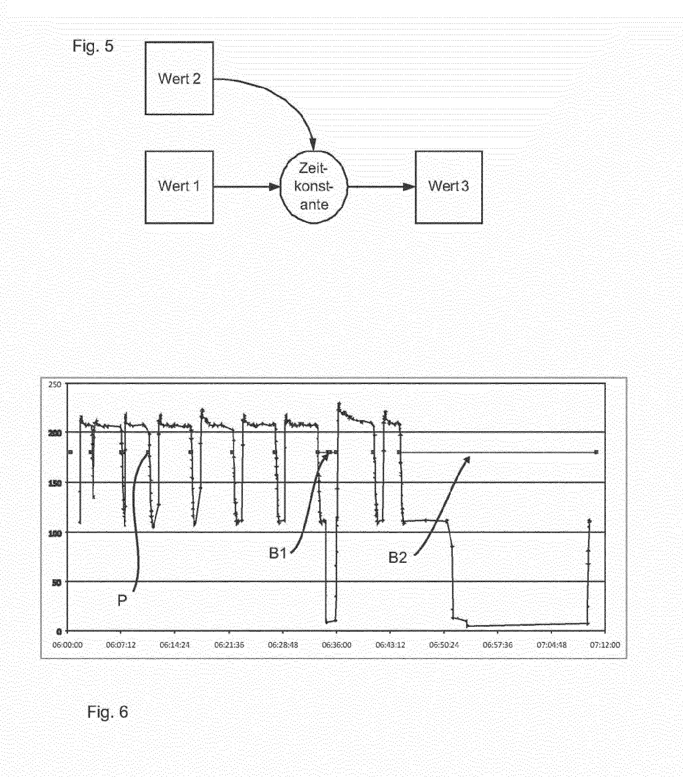

Figur 5 veranschaulicht grob diesen Zusammenhang. So können beispielsweise Eingangsgrößen, hier mit Wert 1 und Wert 2 bezeichnet, in einer Kombination untereinander zu zeitlich begrenzten Tendenzen in anderen Ausgangsgrößen, hier mit Wert 3 bezeichnet, führen. Tritt zum Beispiel ein bestimmter Wert 1 auf und zusätzlich innerhalb eines bestimmten Zeitrahmens der Wert 2, so ergibt sich mit einer bestimmten Wahrscheinlichkeit der Wert 3. Dabei können die Werte 1, 2 und 3 an der gleichen Behandlungsvorrichtung auftreten, es wäre jedoch auch möglich, dass Werte, die an einer Behandlungsvorrichtung auftreten, zu bestimmten Werten (Wert 3) an einer anderen Behandlungsvorrichtung führen.

Der zeitliche Zusammenhang kann dabei eine Konstante sein oder er ergibt sich über einen Faktor anderer Werte (beispielsweise der Maschinengeschwindigkeit). Es ist möglich, dass allgemein die Eingangsgrößen in einer Kombination untereinander zu zeitlich begrenzten Tendenzen in anderen Ausgangsgrößen führen.

Dieser Zusammenhang wird beispielsweise erläutert an dem Zusammenhang zwischen einem Fehler in einer Blasmaschine und dem Energieverbrauch der gesamten Anlage bzw. der Blasmaschine in der Zukunft. Dabei ist es möglich, dass die Wirkleistung einer Blasmaschine und die Korrelation mit den Stopps durch Fehler oder Staus ermittelt wird.

Figur 6 stellt diesen Zusammenhang in einem Diagramm dar. Dabei wird auf der X-Achse eine Systemzeit angezeigt und auf der Y-Achse in willkürlichen Einheiten ein Energieverbrauch. Nach jedem Maschinenstopp, hier durch die Punkte P veranschaulicht, nimmt die Energie des Systems bzw. der Energieverbrauch ab. Bei einem längeren Stopp, wie durch die Bereiche B1 und B2 gezeigt, geht der Energieverbrauch auf nahezu "0" zurück. Damit besteht hier eine direkte Korrelation zwischen der verbrauchten Energie und den aufgetretenen Fehlern. Auf diese Weise kann von Fehlern der Blasmaschine, wie zum Beispiel einem Stau im Auslauf, auf die zu verbrauchende Energie in der Zukunft (meist wenige Minuten später) geschlossen werden.

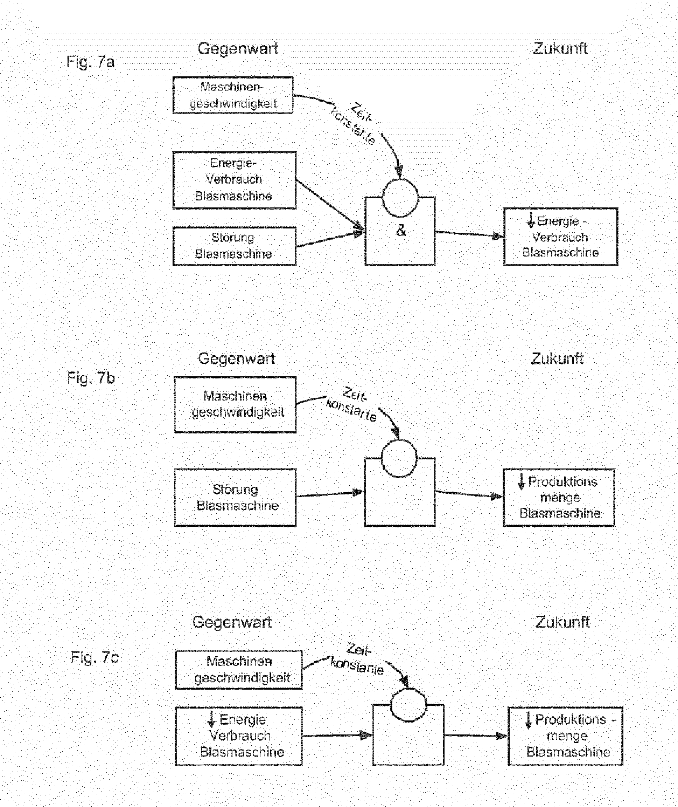

Die Figuren 7a und 7c zeigen drei weitere Beispiele derartiger Zusammenhänge. Wie in Figur 7a gezeigt, kann beispielsweise aus dem Referenzkennwert des Energieverbrauchs der Blasmaschine und einem Kennwert, der zusätzlich eine Störung der Blasmaschine anzeigt, ermittelt werden, dass bei einer vorgegebenen Zeit der Energieverbrauch der Blasmaschine sinken wird. Die Zeitkonstante kann sich dabei wiederum aus der Maschinengeschwindigkeit ergeben.

Wie in Figur 7b gezeigt, ist es auch möglich, dass unter Zugrundelegung eines Referenzkennwerts, der eine Störung in der Blasmaschine anzeigt, für die Zukunft prognostiziert werden kann, dass die Produktion der Blasmaschine sinkt. Auch hier kann wiederum zur Ermittlung einer Zeitkonstante die Maschinengeschwindigkeit zugrunde gelegt werden.

Auch wäre es möglich, aus einem Energieverbrauch der Maschine unter Zugrundelegung einer bestimmten Zeitkonstante, die wiederum aus der Maschinengeschwindigkeit folgt, über eine Entwicklung einer Produktionsmenge der Blasmaschine Auskunft zu geben (vgl. Fig. 7c).

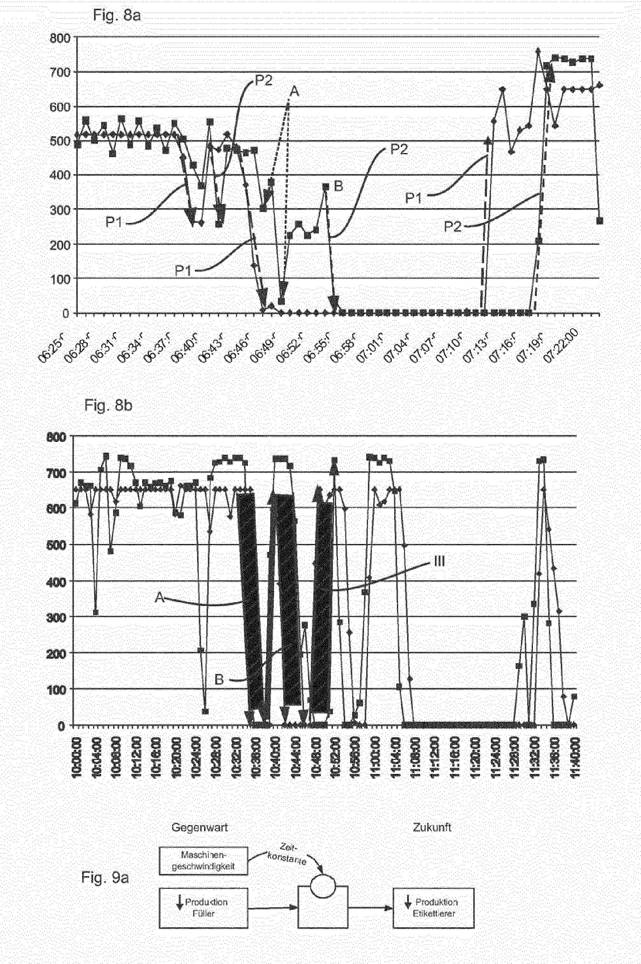

Die Figuren 8a und 8b sowie 9a bis 9c veranschaulichen vergleichbare Zusammenhänge zwischen einer Produktion eines Füllers und einer Produktion einer Etikettiermaschine. Dieser Zusammenhang gilt insbesondere, wenn bei einer Fließbandfertigung einer Abfüllanlage der Füller vor der Etikettiermaschine angeordnet ist.

Wie in Figur 9a gezeigt wird sich ein Absinken der Produktionsleistung eines Füllers nach einer bestimmten Zeit bzw. Zeitkonstante auch auf ein Absinken der Produktion einer Etikettiermaschine aus. Diese Zeitkonstante ergibt sich dabei wiederum aus der Maschinengeschwindigkeit.

Figur 8a veranschaulicht diesen Zusammenhang in einem zeitlichen Diagramm. Dabei beziehen sich die mit Quadraten gekennzeichneten Messwerte auf eine Produktionsleistung einer Etikettiermaschine und die mit Rauten gekennzeichneten Messwerte auf die Produktionsleistung eines Füllers. Die gestrichelten Pfeile P1 kennzeichnen jeweils Abschnitte, in denen die Leistung des Füllers reduziert bzw. gesteigert wurde. Nach einer bestimmten Zeitdauer, die abhängig von der Produktionsleistung ist, folgen dann auch entsprechende Reduzierungen oder Steigerungen in Hinblick auf die Etikettiermaschine (Pfeil P2). Aus diesem Zusammenhang lassen sich damit die oben beschriebenen Zeitkonstanten ermitteln.

Zu dem dargestellten Zeitpunkt A ist die Produktion der Etikettiermaschine unerwartet reduziert worden. Nach der Zeitkonstante in diesem Fall dürfte die Produktion erst nach zirka sechs Minuten und nicht schon nach drei Minuten reduziert werden. In dem Zeitpunkt B wurde dann der Flaschenpuffer abgebaut. Durch die Störungen im Zeitpunkt A ist die Verzögerung bis zum Absinken im Zeitpunkt B länger als die übliche Zeit von sechs Minuten.

Dabei wäre es möglich, dass die dargestellten Werte des Füllers als Referenzkennwerte angesehen werden und die Daten der Etikettiermaschine als Prüfkennwerte. Vorteilhaft werden jedoch einige der dargestellten Werte des Füllers und auch einige der Werte der Etikettiermaschine jeweils als Referenzkennwerte angesehen und wenigstens ein weiterer Wert, bevorzugt eine Vielzahl von Werten des Füllers bzw. der Etikettiermaschine als Prüfkennwerte, um so den in der Figur gezeigten zeitlichen Verlauf darzustellen. Es wird dabei darauf hingewiesen, dass auf diese Weise auch ein Vergleich der einzelnen Werte (durch die zeitliche Auftragung erfolgt)

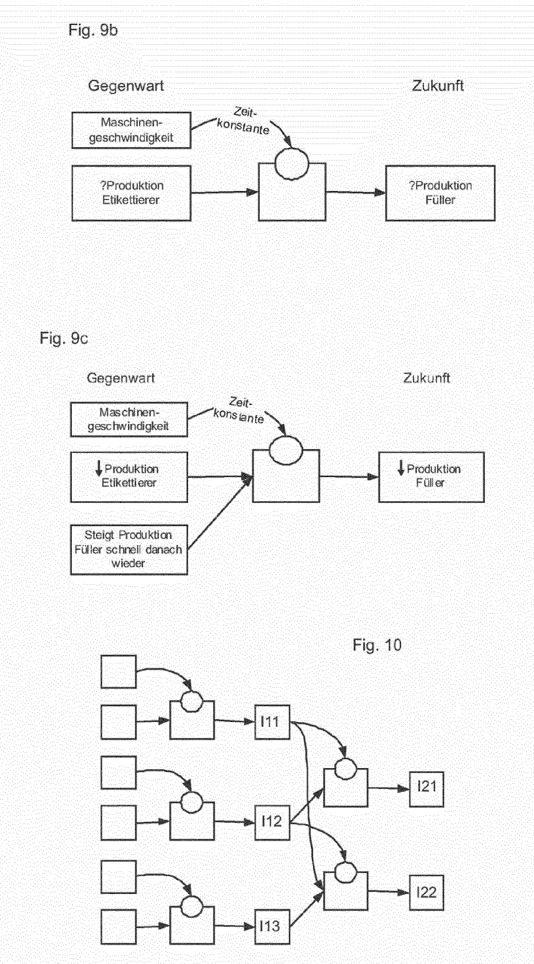

Figur 8b und 9b und c zeigen, dass dieser Zusammenhang auch invers gilt. In dem in Figur 8b gezeigten Zeitpunkt A sinkt die Produktion der Etikettiermaschine und der Füller folgt entsprechend. In Figur 9b wird dieser Zusammenhang erläutert. Sinkt die Produktion der Etikettiermaschine, so wird auch die Produktion des Füllers nach einer vorgegebenen Zeitkonstante, welche sich wiederum aus der Maschinengeschwindigkeit ergibt, sinken.

Außerdem lässt sich ein Zusammenhang feststellen, dass oft nach einem Abfall der Etikettiererleistung und einem schnellen Anstieg der Produktionsleistung des Etikettierers der Füller wieder in einen Fehlerzustand geht. Der Zusammenhang ist in dem Zeitabschnitt B dargestellt, in dem auf einen Anstieg der Etikettiererleistung mit kurzem Versatz ein Absinken der Füllerleistung folgt. Dieses Verhalten kann durch Analyse der Daten ermittelt und überprüft werden.

Figur 9c veranschaulicht diesen Zusammenhang. Hier werden die beiden Daten eines Absinkens der Produktion der Etikettiermaschine und eines schnellen Ansteigens der Füllerproduktion miteinander verknüpft und unter Berücksichtigung der Zeitkonstante ausgewertet. Im Ergebnis sinkt eine Produktionsleistung des Füllers.

Wenn aus den oben beschriebenen Referenzkennwerten ein derartiges Verhaltensmuster erkannt wird, könnte zum Beispiel versucht werden, die Füllmaschine langsamer anzufahren.

Weiterhin könnten die oben erwähnten und beschriebenen Einzelresultate zu einem Gesamtbild verknüpft werden. Dies wird grob schematisch in Fig. 10 veranschaulicht. Dabei könnten, wie im linken Teil des Bildes gezeigt, einzelne Verhaltensmuster jeweils miteinander verknüpft werden und gegebenenfalls auch die Ergebnisse wiederum weiteren Verknüpfungen, zum Beispiel als Zeitkonstanten, aber auch als Referenzkennwerte, zugeführt werden. So könnten in einem ersten Schritt beispielsweise die Informationen 111, 112 und 113 ausgegeben werden und diese wiederum mit Referenzkennwerten oder auch miteinander verknüpft werden, um so zu den Aussagen I21 oder I22 zu gelangen. Auf diese Weise können die kleinen Bausteine miteinander verknüpft werden und ergeben einen größeren Zusammenhang.

So kann die gesamte Behältnisbehandlungsanlage analysiert und optimiert werden und auf diese Weise können auch Fehler vermieden werden. So können beispielsweise Energieverbräuche vorhergesagt werden, Fehler vermieden werden und damit die Anlage effizienter betrieben werden. Zu diesem Zweck wäre es auch möglich, entsprechende Algorithmen zu erstellen bzw. auch diese Algorithmen halbautomatisch oder automatisch während der Laufzeit der Behältnisbehandlungsanlage anzupassen.

### Bezugszeichenliste

- 1: Behältnisbehandlungsanlage
- 2: erste Behandlungsvorrichtung
- 2a: zweite Behandlungsvorrichtung
- 2b: erste Behandlungsvorrichtung
- 4: zweite Behandlungsvorrichtung
- 6: weitere Behandlungsvorrichtung
- 8: Behandlungsvorrichtung (Sterilisationseinrichtung)
- 10: Behältnisse (Kunststoffvorformlinge)
- 12: Behandlungsvorrichtung zum Etikettieren der befüllten Behältnisse
- 15: Vergleichseinrichtung
- 16: Speichereinrichtung
- 18: Prozessoreinrichtung
- 20: Steuerungseinrichtung
- 22: Transporteinrichtung
- 22a: Sensoreinrichtung
- 24: Heizelemente
- 24a: Sensoreinrichtung
- 42: Träger
- 42a: Sensoreinrichtung
- 44: Umformungsstationen
- 44a: eine oder mehrere Sensoreinrichtungen
- 45: Greifelement
- 46: Zuführeinrichtung
- 48: Abführeinrichtung
- 61: Füllelement
- 62: Träger
- 64: Zuführstern
- 65: Antriebseinrichtung
- 65a: Sensoreinrichtung zum Aufnehmen von charakteristischen Daten
- 66: Abführstern
- 82a: Sensoreinrichtung
- 84: Zuführeinrichtung
- PK1, PK2: Prüfkennwerten
- RK1,RK2,RKn: Referenzkennwerte
- T1, T2, T3: Zeitpunkt
- A, B: Zeitpunkt
- P: Punkte
- B1, B2: Bereiche
- P1, P2: Pfeile
- L: Leistung
- I: Information

## Patentansprüche

1. Verfahren zum Betreiben einer Behältnisbehandlungsanlage (1), wobei Behältnisse mit einer ersten Behandlungsvorrichtung (2) dieser Behältnisbehandlungsanlage (1) in einer ersten vorgegebenen Weise behandelt werden, anschließend von dieser ersten Behandlungsvorrichtung (2) zu einer zweiten Behandlungsvorrichtung (4) der Behältnisbehandlungsanlage (1) transportiert werden und anschließend von der zweiten Behandlungsvorrichtung (4) in einer zweiten vorgegebenen Weise behandelt werden, wobei mittels ersten Sensoreinrichtungen (22a, 24a) eine erste Vielzahl von ersten Referenzkennwerten (RK1) aufgenommen wird, welche für die Behandlung der Behältnisse (10) mit der ersten Behandlungsvorrichtung (2) charakteristisch sind und mittels zweiten Sensoreinrichtungen (42a, 44a) eine zweite Vielzahl von zweiten Referenzkennwerten (RK2) aufgenommen wird, welche für die Behandlung der Behältnisse (10) mit der zweiten Behandlungsvorrichtung (4) charakteristisch sind, und wobei diese Referenzkennwerte (RK1, RK2) in einer Speichereinrichtung (16) abgespeichert werden,
**dadurch gekennzeichnet, dass**
die Referenzkennwerte (RK1, RK2) mit einem Zeitwert erfasst werden, der für das zeitliche Auftreten des jeweiligen Referenzkennwerts (RK1, RK2) charakteristisch ist und eine Vielzahl von Prüfkennwerten (PK1, PK2) aufgenommen wird und aus einem Vergleich zwischen wenigstens einem dieser Prüfkennwerte (PK1, PK2) und wenigstens einem Referenzkennwert (RK1, RK2) wenigstens eine Information (I) ausgegeben wird, wobei sich die Information (I) auf Zustände der Anlage wie Energieverbrauch, Produktionsleistung oder Wartungsintervalle bezieht, wobei die Behältnisbehandlungsanlage (1) unter Berücksichtigung der Information gesteuert wird,
wobei mehrere Prüfkennwerte zur Ausgabe der Information logisch miteinander verknüpft werden und durch diese logische Verknüpfung der Prüfkennwerte mehrere Prüfkennwerte unterschiedlicher Sensoreinrichtungen zur Ausgabe der Informationen genutzt werden.

2. Verfahren nach Anspruch 1,
**dadurch gekennzeichnet, dass**
mit den aufgenommenen Referenzkennwerten (RK1, RK2) weitere Informationen abgelegt werden, wobei die weiteren Informationen solche sind die beispielsweise einen zugeordneten Ort wie etwa eine Position, eine Maschine oder einen Bereich einer Maschine oder einer Anlage oder dergleichen beschreiben.

3. Verfahren nach Anspruch 1 oder 2,
**dadurch gekennzeichnet, dass**
viele oder alle Maschinendaten von einem Leitsystem (MES/LDS) gesammelt werden, sodass Geschwindigkeiten der Maschinen (2, 4), die Anzahl der Behältnisse (10) auf einem Transportband, Ausgabewerte von Stauschaltern, Temperaturen, Sorten der Maschinen, und/oder Verbrauchsmaterialien unterschiedlicher Hersteller permanent erfasst werden.

4. Verfahren nach zumindest einem der vorhergehenden Ansprüche,
**dadurch gekennzeichnet, dass**
Störungen bei der Behältnisbehandlung, wie beispielsweise bei der Abfüllung, durch eine Betriebsdatenerfassung erfasst und gespeichert werden, und die Störungen automatisch von den jeweiligen Anlagenbetreibern erfasst werden, und wobei sofern an einer bestimmten Behandlungsvorrichtungen (2, 4) eine Störung auftritt, welche eine bestimmte Grenzschwelle überschreitet, ein Fehlerprotokoll erstellt wird und dabei werden auch die Störungen aufgeführt, welche in den vorgeordneten Anlagenteilen aufgetreten sind.

5. Verfahren nach zumindest einem der vorhergehenden Ansprüche,
**dadurch gekennzeichnet, dass**
mittels statistischer Methoden anhand von einzelnen Referenzkennwerten (RK1, RK2) und/oder Prüfkennwerten (PK1, PK2) Muster erkannt werden, und falls derartige Muster in einem bestimmten Zeitraum einer Störung häufiger vorkommen, als zu anderen Zeiten, so auf die Störung geschlossen wird.

6. Verfahren nach dem vorhergehenden Anspruch,
**dadurch gekennzeichnet, dass**
nach einem Erkennen der Muster und einem anschließenden Erlernen der Muster, anhand dieser Muster entsprechende Aktionen angestoßen werden, wie beispielsweise eine Warnung an den Maschinenbetreiber, auszugeben.

7. Verfahren nach Anspruch 1,
**dadurch gekennzeichnet, dass**
Verhaltensmuster der einzelnen Behandlungsvorrichtungen (2, 4) jeweils miteinander zu einem Gesamtbild verknüpft werden und insbesondere auch die Ergebnisse wiederum weiteren Verknüpfungen, zum Beispiel als Zeitkonstanten oder als weitere Referenzkennwerte, zugeführt werden.

8. Verfahren nach wenigstens einem der vorangegangenen Ansprüche,
**dadurch gekennzeichnet, dass**
die Referenzkennwerte aus einer Gruppe von Referenzkennwerten ausgewählt sind, welche Stromkennwerte, Spannungskennwerte, Temperaturkennwerte, Geschwindigkeitskennwerte, Drehmomentkennwerte, Impulskennwerte, Leistungskennwerte, Stückzahlkennwerte, zeitliche Kennwerte, Kombinationen hieraus oder dergleichen enthält.

9. Verfahren nach wenigstens einem der vorangegangenen Ansprüche,
**dadurch gekennzeichnet, dass**
einem bestimmten an einer nachgeordneten Vorrichtung (4) ermittelten Prüfkennwert ein zu einem früheren Zeitpunkt an einer vorangeordneten Vorrichtung (2) ermittelter Prüfkennwert zugeordnet wird.

10. Verfahren nach wenigstens eine der vorangegangenen Ansprüche,
**dadurch gekennzeichnet, dass**
Laufzeiten der Behältnisse (10) zwischen den Behandlungsvorrichtungen (2,4) berücksichtigt werden.

11. Verfahren nach wenigstens einem der vorangegangenen Ansprüche,
**dadurch gekennzeichnet, dass**
die Behandlungsanlage wenigstens drei Vorrichtungen aufweist, welche die Behältnisse behandeln, und wobei wenigstens eine Behandlungsvorrichtung aus einer Gruppe von Vorrichtungen ausgewählt ist, welche Umformungsvorrichtungen zum Umformen von Kunststoffvorformlingen zu Kunststoffbehältnissen, Füllvorrichtungen zum Befüllen von Behältnissen, Transportvorrichtungen zum Transportieren von Behältnissen, Sterilisationsvorrichtungen zum Sterilisieren von Behältnissen, Verschließvorrichtungen zum Verschließen von Behältnissen mit Verschlüssen, Etikettiervorrichtungen zum Etikettieren von Behältnissen, Kombinationen hieraus oder dergleichen enthält.

12. Behältnisbehandlungsanlage (1) mit einer ersten Behandlungsvorrichtung (2) welche die Behältnisse (10) in einer ersten vorgegebenen Weise behandelt, einer zweiten Behandlungsvorrichtung (4), welche in einer Transportrichtung der Behältnisse (10) nach der ersten Behandlungsvorrichtung (2) angeordnet ist und welche die Behältnisse in einer zweiten vorgegebenen Weise behandelt, mit einer ersten Sensoreinrichtung (22a, 24a) welche wenigstens einen ersten Referenzkennwert (RK1), der für die Behandlung der Behältnisse (10) mit der ersten Behandlungsvorrichtung (2) charakteristisch ist, aufnimmt, mit einer zweiten Sensoreinrichtung (42a, 44a) welche wenigstens einen zweiten Referenzkennwert (RK2), der für die Behandlung der Behältnisse (10) mit der zweiten Behandlungsvorrichtung (2) charakteristisch ist, aufnimmt, und mit einer Speichereinrichtung (16) zum Abspeichern der Kennwerte, wobei diese Speichereinrichtung (16) derart ausgebildet ist, dass sie eine Zuordnung von Zeitwerten zu den Referenzkennwerten ermöglicht, wobei diese Zeitwerte für den Zeitpunkt oder Zeitraum des Auftretens der Referenzkennwerte (RK1, RK2) charakteristisch sind,
**dadurch gekennzeichnet, dass**
eine Vergleichseinrichtung (15) vorgesehen ist, welche derart konfiguriert ist, einen Vergleich von aufgenommenen Prüfkennwerten (PK1, PK2) mit den Referenzkennwerten zu ermöglichen, sowie eine Prozessoreinrichtung (18), welche derart konfiguriert ist,
auf Grundlage eines derartigen Vergleichs wenigstens eine Information (I) auszugeben, wobei sich die Information (I) auf Zustände der Anlage wie Energieverbrauch, Produktionsleistung oder Wartungsintervalle bezieht, und wobei
die Behältnisbehandlungsanlage (1) derart konfiguriert ist, dass sie unter Berücksichtigung der Information gesteuert wird, wobei
die Behältnisbehandlungsanlage derart konfiguriert ist, mehrere Prüfkennwerte zur Ausgabe der Information logisch miteinander zu verknüpfen und durch diese logische Verknüpfung der Prüfkennwerte mehrere Prüfkennwerte unterschiedlicher Sensoreinrichtungen zur Ausgabe der Informationen zu nutzen.

## Claims

1. A method for operating a container treatment plant (1), wherein containers are treated by a first treatment device (2) of this container treatment plant (1) in a first predefined manner, are subsequently transported from this first treatment device (2) to a second treatment device (4) of the container treatment plant (1) and are subsequently treated by the second treatment device (4) in a second predefined manner, wherein by first sensor units (22a, 24a), a first plurality of first reference characteristic values (RK1) are recorded, which are characteristic of the treatment of the containers (10) with the first treatment device (2), and by second sensor units (42a, 44a), a second plurality of second reference characteristic values (RK2) is recorded, which are characteristic of the treatment of the containers (10) with the second treatment device (4), and wherein these reference characteristic values (RK1, RK2) are stored in a storage device (16),
**characterised in that**
the reference characteristic values (RK1, RK2) are detected with a time value that is characteristic of the temporal occurrence of the respective reference characteristic value (RK1, RK2), and a plurality of test characteristic values (PK1, PK2) is recorded, and as a result of a comparison between at least one of said test characteristic values (PK1, PK2) and at least one reference characteristic value (RK1, RK2), at least one information (I) is output that, wherein the information (I) refer to conditions of the plant such as energy consumption, output or maintenance intervals, wherein the container treatment plant (1) is controlled taking into account the information,
wherein a number of test characteristic values are logically linked with each other for outputting the information and this logical linking of the test characteristic values, several test characteristic values from different sensor units are used for outputting the information.

2. The method according to claim 1,
**characterised in that**
with the re reference characteristic values (RK1, RK2) recorded further information are deposited, wherein the further information are such which or example describe an associated location such as a position, a machine or an area of a machine or of a system or the like.

3. The method according to claim 1 or 2,
**characterised in that**
many or all of the machine data are collected by a control system (MES/LDS), so that machines (2, 4) speeds, the number of containers (10) on a transport belt, output values of jam switches, temperatures, machine types and/or consumables of different manufactures are recorded.

4. The method according to at least one of the preceding claims, **characterised in that**
faults in container treatment, such as for example during the filling operation, can be recorded and stored by an operation data collection, and the faults are automatically detected by the respective system operators, and wherein a fault occurs on a certain system exceeds which exceeds a certain limit value, an error log is created which also lists the faults that occurred in the upstream system components.

5. The method according to at least one of the preceding claims, **characterised in that**
statistic processes are used on the basis of individual reference characteristic values (RK1, RK2) and/or test characteristic values to detect patterns and if such patterns occur within a certain period of time of a fault more often than at other times, a conclusion can be made that a fault has occurred.

6. The method according to the preceding claim,
**characterised in that**
after the pattern has detected and a subsequent learning of the patterns on the basis of these pattern corresponding actions may be triggered, such as for example a warning may be output to the machine operator.

7. The method according to claim 1,
**characterised in that**
behaviour patterns of the individual treatment devices (2, 4) are in each case linked with each other to an overall image and in particular also the results are forwarded to further linking operations, for example as time constants, but also as further reference characteristic values.

8. The method according to at least one of the preceding claims, **characterised in that**
the reference characteristic values are selected from a group of reference characteristic values which includes current characteristic values, voltage characteristic values, temperature characteristic values,
speed characteristic values, torque characteristic values, momentum characteristic values, power characteristic values, quantity characteristic values, temporal characteristic values, combinations therefrom or the like.

9. The method according to at least one of the preceding claims, **characterised in that**
a certain test characteristic value determined at a downstream device (4) has associated therewith a test characteristic value determined at an earlier point in time on an upstream device (2).

10. The method according to at least one of the preceding claims, **characterised in that**
run times of the containers (10) are taken into account between the treatment devices (2, 4).

11. The method according to at least one of the preceding claims, **characterised in that**
the treatment plant hast at least three devices which treat containers, and wherein at least one treatment device is selected from a group of devices including moulding devices for moulding plastics material preforms into plastics material containers, filling devices for filling containers, transport devices for transporting containers, sterilisation devices for sterilising containers, closing devices for closing containers with caps, labelling devices for labelling containers, combinations therefrom or the like.

12. A container treatment plant (1) comprising a first treatment device (2) that treats the containers (10) in a first predefined manner, a second treatment device (4) that is arranged downstream of the first treatment device (2) in the transport direction of the containers (10) and that treats the containers in a second predefined manner, comprising a first sensor unit (22a, 24a) that records at least one first reference characteristic value (RK1) that is characteristic of the treatment of the containers (10) with the first treatment device (2), comprising a second sensor unit (42a, 44a) that records at least one second reference characteristic value (RK2) that is characteristic of the treatment of the containers (10) with the second treatment device (2), and having a storage unit (16) for storing the reference characteristic values, wherein this storage unit (16) is designed in such a way that it allows an association of time values with the reference characteristic values, wherein these time values are characteristic of the point in time or the period of time of the occurrence of the reference characteristic values (RK1, RK2), **characterised in that**
a comparison unit (15) which is configured in such a way that it enables a comparison of recorded test characteristic values (PK1, PK2) with the reference characteristic values, and a processor unit (18) which is configured in such a way that outputs at least one piece of information (I) on the basis of such a comparison,
wherein the information (I) refer to conditions of the plant such as energy consumption, output or maintenance intervals, wherein the container treatment plant (1) is configured in such a way that it is controlled taking into account the information, wherein the container treatment plant is configured in such a way that a number of test characteristic values are logically linked with each other for outputting the information and this logical linking of the test characteristic values, several test characteristic values from different sensor units are used for outputting the information.

## Revendications

1. Procédé de fonctionnement d'une installation de traitement de récipients (1), dans lequel des récipients sont traités d'une première manière prédéfinie avec un premier dispositif de traitement (2) de ladite installation de traitement de récipients (1), puis sont transportés depuis ledit premier dispositif de traitement (2) vers un deuxième dispositif de traitement (4) de l'installation de traitement de récipients (1) puis sont traités d'une deuxième manière prédéfinie par le deuxième dispositif de traitement (4), dans lequel une première pluralité de premières valeurs caractéristiques de référence (RK1) est relevée au moyen de premiers systèmes de capteur (22a, 24a), lesquelles sont caractéristiques du traitement des récipients (10) avec le premier dispositif de traitement (2) et une deuxième pluralité de deuxièmes valeurs caractéristiques de référence (RK2) est relevée au moyen de deuxièmes systèmes de capteur (42a, 44a), lesquelles sont caractéristiques du traitement des récipients (10) avec le deuxième dispositif de traitement (4), et dans lequel lesdites valeurs caractéristiques de référence (RK1, RK2) sont sauvegardées dans un système de mémoire (16),
**caractérisé en ce que**
les valeurs caractéristiques de référence (RK1, RK2) sont détectées avec une valeur de temps, qui est caractéristique de l'apparition dans le temps de la valeur caractéristique de référence (RK1, RK2) respective et une pluralité de valeurs caractéristiques de contrôle (PK1, PK2) est relevée et au moins une information (I) est envoyée à partir d'une comparaison entre au moins une desdites valeurs caractéristiques de contrôle (PK1, PK2) et au moins une valeur caractéristique de référence (RK1, RK2), dans lequel l'information (I) se rapporte à des états de l'installation, tels que la consommation d'énergie, la puissance de production ou des intervalles de maintenance, dans lequel l'installation de traitement de récipients (1) est commandée en tenant compte de l'information,
dans lequel plusieurs valeurs caractéristiques de contrôle sont combinées entre elles de manière logique pour envoyer l'information et, plusieurs valeurs caractéristiques de contrôle de différents systèmes de capteur sont utilisées grâce à cette combinaison logique pour envoyer les informations.

2. Procédé selon la revendication 1,
**caractérisé en ce que**
d'autres informations sont stockées avec les valeurs caractéristiques de référence (RK1, RK2) relevées, dans lequel les autres informations sont des informations qui décrivent par exemple un emplacement associé, comme une position, une machine ou une zone d'une machine ou d'une installation ou similaire.

3. Procédé selon la revendication 1 ou 2,
**caractérisé en ce que**
de nombreuses ou la totalité des données de machine sont collectées par un système de gestion (MES/LDS) si bien que des vitesses des machines (2, 4), le nombre des récipients (10) sur une bande transporteuse, des valeurs envoyées d'interrupteurs de blocage, des températures, des types des machines et/ou des matériaux de consommation de différents fabricants sont détectés de manière permanente.

4. Procédé selon au moins l'une quelconque des revendications précédentes,
**caractérisé en ce que**
des défaillances lors du traitement des récipients, comme lors du remplissage, sont détectées et mémorisées par une détection de données de fonctionnement, et les défaillances sont détectées automatiquement par les exploitants d'installation concernés, et dans lequel dans la mesure où une défaillance survient sur un dispositif de traitement (2, 4) donné, laquelle dépasse un seuil limite donné, un protocole d'erreur est établi, dans lequel sont répertoriées également les défaillances, qui sont survenues dans les parties de l'installation en amont.

5. Procédé selon au moins l'une quelconque des revendications précédentes,
**caractérisé en ce que**
des schémas sont identifiés au moyen de procédés statistiques à l'aide de diverses valeurs caractéristiques de référence (RK1, RK2) et/ou valeurs caractéristiques de contrôle (PK1, PK2), et si de tels schémas se produisent plus fréquemment dans une période donnée d'une défaillance qu'à d'autres moments, une conclusion sur la défaillance est alors tirée.

6. Procédé selon la revendication précédente,
**caractérisé en ce que**
après une identification des schémas et un apprentissage consécutif des schémas, des actions correspondantes sont prises à l'aide desdits schémas, comme l'envoi d'une alerte à l'exploitant de la machine.

7. Procédé selon la revendication 1,
**caractérisé en ce que**
des schémas de comportement des divers dispositifs de traitement (2, 4) sont combinés respectivement entre eux en un aperçu global et notamment les résultats sont à nouveau amenés à d'autres combinaisons, par exemple en tant que constantes de temps ou en tant qu'autres valeurs caractéristiques de référence.

8. Procédé selon au moins l'une quelconque des revendications précédentes,
**caractérisé en ce que**
les valeurs caractéristiques de référence sont choisies parmi un groupe de valeurs caractéristiques de référence, lequel contient des valeurs caractéristiques de courant, des valeurs caractéristiques de tension, des valeurs caractéristiques de température, des valeurs caractéristiques de vitesse, des valeurs caractéristiques de couple de rotation, des valeurs caractéristiques d'impulsion, des valeurs caractéristiques de puissance, des valeurs caractéristiques de quantité, des valeurs caractéristiques temporelles, des combinaisons de celles-ci ou similaires.

9. Procédé selon au moins l'une quelconque des revendications précédentes,
**caractérisé en ce que**
une valeur caractéristique de contrôle déterminée à un moment antérieur sur un dispositif disposé en amont (2) est associée à une valeur caractéristique de contrôle donnée déterminée sur un dispositif disposé en aval (4).

10. Procédé selon au moins l'une quelconque des revendications précédentes,
**caractérisé en ce que**
des temps de parcours des récipients (10) entre les dispositifs de traitement (2, 4) sont pris en compte.

11. Procédé selon au moins l'une quelconque des revendications précédentes,
**caractérisé en ce que**
l'installation de traitement présente au moins trois dispositifs, lesquels traitent les récipients, et dans lequel au moins un dispositif de traitement est choisi parmi un groupe de dispositifs, lequel contient des dispositifs de façonnage pour façonner des préformes en matière plastique en récipients en matière plastique, des dispositifs de remplissage pour remplir des récipients, des dispositifs de transport pour transporter des récipients, des dispositifs de stérilisation pour stériliser des récipients, des dispositifs de fermeture pour fermer des récipients avec des systèmes de fermeture, des dispositifs d'étiquetage pour étiqueter des récipients, des combinaisons de ceux-ci ou similaires.

12. Installation de traitement de récipients (1) avec un premier dispositif de traitement (2), lequel traite les récipients (10) d'une première manière spécifiée, un deuxième dispositif de traitement (4), lequel est disposé après le premier dispositif de traitement (2) dans une direction de transport des récipients (10) et lequel traite les récipients d'une deuxième manière spécifiée, avec un premier système de capteur (22a, 24a), lequel relève au moins une première valeur caractéristique de référence (RK1), qui est caractéristique du traitement des récipients (10) avec le premier dispositif de traitement (2), avec un deuxième système de capteur (42a, 44a), lequel relève au moins une deuxième valeur caractéristique de référence (RK2), qui est caractéristique du traitement des récipients (10) avec le deuxième dispositif de traitement (2), et avec un système de mémorisation (16) destiné à sauvegarder des valeurs caractéristiques, dans lequel ledit système de mémorisation (16) est réalisé de telle manière qu'il permet une association des valeurs de temps aux valeurs caractéristiques de référence, dans lequel lesdites valeurs de temps sont caractéristiques du moment ou de la période de l'apparition des valeurs caractéristiques de référence (RK1, RK2), **caractérisée en ce que**
sont prévus un système de comparaison (15), lequel est configuré de manière à permettre une comparaison de valeurs caractéristiques de contrôle (PK1, PK2) relevées aux valeurs caractéristiques de référence, ainsi qu'un système de processeur (18), lequel est configuré de manière à envoyer au moins une information (I) sur la base d'une telle comparaison,
dans lequel l'information (I) se rapporte à des états de l'installation comme la consommation d'énergie, la puissance de production ou des intervalles de maintenance, et dans lequel l'installation de traitement de récipients (1) est configurée de telle manière qu'elle est commandée en tenant compte de l'information, dans lequel l'installation de traitement de récipients est configurée de manière à combiner de manière logique entre elles plusieurs valeurs caractéristiques de contrôle pour envoyer l'information et pour utiliser plusieurs valeurs caractéristiques de contrôle de différents systèmes de capteur pour envoyer les informations grâce à cette combinaison logique des valeurs caractéristiques de contrôle.
